# EUROPEAN PATENT SPECIFICATION

(11) **EP 2 385 708 B1**
(45) Date of publication and mention of the grant of the patent: **28.11.2012**
(21) Application number: 11163151.1
(22) Date of filing: 20.04.2011
(51) Int. Cl.: H04Q 1/06, H04Q 1/14, H01R 9/24

(54) **Main distribution frame for control units of data communication systems**
Hauptverteiler für Steuereinheiten von Datenkommunikationssystemen
Repartiteur principal pour des unités de control de systèmes de communication de données

(30) Priority: 05.05.2010 IT TO20100376
(43) Date of publication of application: 09.11.2011
(73) Proprietor: Fimar S.r.l., 20127 Milano (IT)
(72) Inventor: Mattiello, Luca, 20037, Paderno Dugnano (MI) (IT); Fischietti, Marco, 20095, Cusano Milanino (MI) (IT)
(74) Representative: Di Gennaro, Sergio

(56) References cited:
- US-A- 5 697 811
- US-A- 5 800 215

## Description

The present invention refers to a main distribution frame that can be modulated for the distribution and the laying of cables and/or optical fibers, in environments wherein there is an elevated number of connection systems, such as for instance in control units adapted to distribute services, such as high speed internet connections.

With the technology development and the huge quantity of communications, the connection systems are organized into big control units or cabins comprising a high number of optical fibers and/or cables wirings.

The high number of cables or optical fibers in these control units are normally organized into bundles which many times are twisted together because the laying is sometimes bad organized or not organized at all, that is the cables are left in the free space without any criterion.

In these control units, after the first laying, it is therefore complicated to determine the path of a particular communication means inside the control unit itself, creating various problems, in case of changes of operator by the user, failures or malfunctionings, for finding again which is the failed connection and for its successive connection and/or replacement.

Is also known, from patent application US5800215, a distribution block for telecommunication and data transmission applications, in particular for the main distribution frame of telephone and data lines. The distribution block includes insulation displacement contact elements for the connection of the subscriber cables as well as of the exchange office cables. One-piece contact springs are disposed in the interior of the modular-design distribution block. A mounting bracket, in particular for receiving distribution blocks is provided including a U-shaped tub. A device for guiding cables is rotatably moved in a partial section, and with cable guide portions. A reduction in size, an improvement of connection tasks, the individual protection of double wires, a reliable grounding and a cable guiding which is substantially resistant to buckling and bending are secured, is achieved by that one-piece contact springs disposed in the interior of distribution block.

The present invention proposes to solve the above mentioned problems by making a distribution frame inserted in the structure of the control unit, for organizing and distributing the optical fibers or cables, entering and outgoing, facilitating the maintenance or laying operations, because all the communication cables are well organized.

The control unit using this distribution frame will result as modulable, able to quickly and easily insert or extract the services integrated with it; furthermore, this invention permits to subdivide the wirings among the systems of communication, such that they cannot cross themselves and to make this distribution frame very ductile for eventual modifications and displacements which the various connection systems can undergo.

This invention permits to ensure optical fiber cable bending angles sufficiently wide in the wiring inside the control unit, in such a way as to remain undamaged and not to cause attenuations of the signal penalizing the communication system.

An aspect of the present invention relates to a main distribution frame having the characteristics of the attached claim 1.

Further characteristics are contained in the attached dependent claims.

The characteristics and advantages of this main distribution frame will be clearer and evident from the following description of an embodiment with reference to the attached figures, which show specifically:

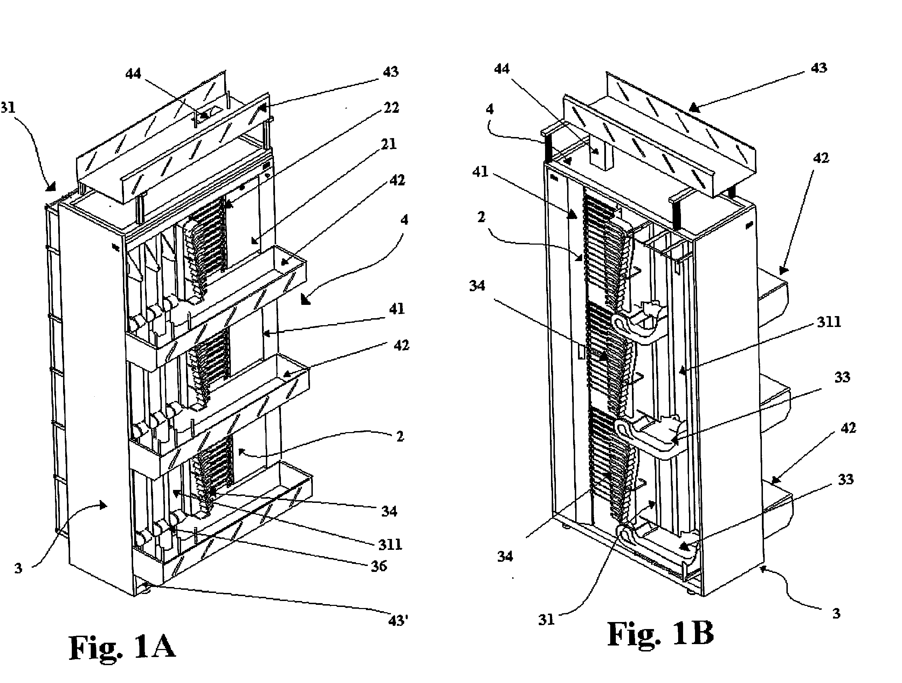

- figures 1A and 1B show the perspective view of a control unit wherein it is applied the present invention, particularly the figure 1A the user side and the figure 1B the device side of the mentioned control unit;

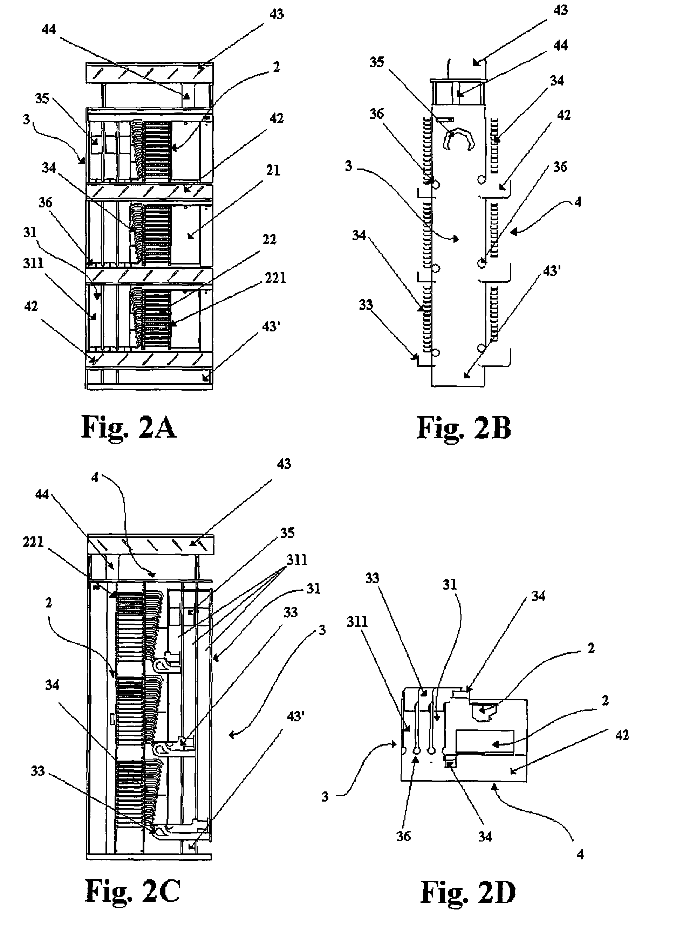

- figures 2A, 2B, 2C, 2D show different projections of the control unit for figures 1A and 1B;

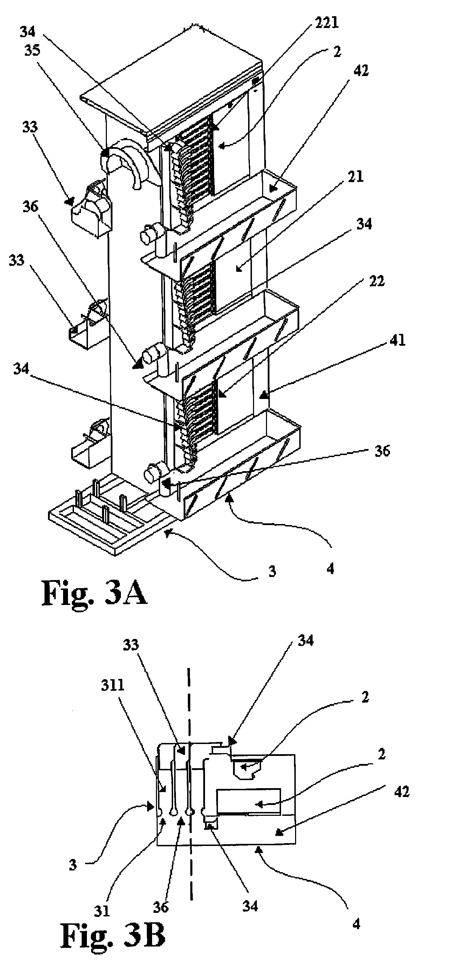

- figures 3A and 3B show a section of the distributor applied to the control unit in particular figure 3A the perspective view of this control unit and figure 3B the projection with the indication of the section line;
- figure 4 shows an alternative embodiment of this control unit;
- figure 5 shows the union of various control units assembled modularly according to the present invention;
- figures 6A and 6B show an example of path covered by cables within this distribution frame in perspective view 6A and through front view 6B, lateral view and from top view respectively.

With reference to the mentioned figures, distribution frame 3 applied to control units or cabins, comprises a bearing structure 4 to which the cables arrive and which must be interconnected among them. This distribution frame comprises a plurality of connection blocks 2 modularly arranged, comprising at least a connection module 21 and at least an ending module 22 supported and organized thanks to a plurality of slots 41 comprised in said structure 4, adapted to house blocks 2, to which these cables arrive, for instance optical cables.

Said distribution frame is characterized in that it comprises at least a distributor 31 arranged near said blocks 2 adapted to distribute and organize the various wirings among the same blocks, in such a way that the cables to be interconnected follow a predetermined path depending on their destination and function.

Bearing structure 4 is formed by a preferably metallic frame comprising this plurality of slots 41 adapted to house various connection blocks 2 organizing them in an ordinate way, for instance piled up in columns.

Said slots 41 comprise also an expulsion mechanism adapted to remove blocks 2, for instance for their replacement, permitting the interchangeability of the blocks themselves.

Above and under the frame of bearing structure 4 there is at least a canalizer 43, preferably rectangular shaped viewed in section, adapted to canalize and to contain the various flows of cables both entering and outgoing from this control unit.

Each connection block 2 comprises essentially connection module 21, to which the cables arrive, adapted to distribute the services brought by said cables, and ending module 22 comprising a plurality of connectors 221, adapted to receive the services duly distributed by connection module 21.

Among the connectors of the ending modules of different blocks occur the interconnections among these services.

Bearing structure 4 and slots 41 are preferably organized in such a way as to create levels and in each level it is possible to insert a plurality of these connection blocks 2. In the following embodiment for each level there are two connection blocks 2, preferably arranged on two different faces of the control unit, creating thus two sides: a device side and a user side.

It is defined as level a plane wherein is arranged a plurality of blocks 2; for clarity purposes, the denomination of the levels is preferably alphanumerical, decreasing starting from the lowest level to the upper ones.

It is defined as device side, the side where arrive the cables, bearing the various services of the various operators, which are opportunely connected to blocks 2 for being distributed.

It is defined as user side, the side where arrive the cables deriving from the end users, for using the various services proposed by the operators.

The distribution frame according to the present invention permits then to interconnect among them the cables which arrive from the device side with the ones deriving from the user side.

Using this subdivision into two sides, the organization of the cable flow is optimized.

For interconnecting to various connection blocks 2, positioned both on the device side and on the user side, the cables deriving from canalizers 43, positioned above and under bearing structure 4, it is used a conveyor 44 which preferably covering all the height of structure 4 subdivides the fibers into a number of flows preferably equal to the number of levels.

The conveyor, with preferably rectangular shaped section, permits to lift or put down the cable bundles toward block 2 to which they are assigned.

In the proposed form of embodiment, the cables deriving from the end users are preferably canalized in canalizer 43' positioned under structure 4; whereas the cables deriving from the service operators are preferably canalized in canalizer 43 positioned above structure 4.

For distributing the services provided by the operators toward the users, it is necessary to put into communication the two sides of structure 4.

Said distribution frame 3 uses distributor 31 in such a way as to organize at best the laying of these wirings, making easy both the insertion of a new block 2 to the control units and the elimination of the connections to a service of a particular operator.

Distributor 31 comprises at least a column 311 wherein only the cables directed toward various blocks 2 can vertically slide and in particular toward blocks of a predetermined level.

These columns 311, which are preferably realized through profiles of metallic material or equivalent materials, are aligned and put side by side to structure 4 where blocks 2 are arranged.

The number of columns 311 depends on the number of levels present in this control unit. Preferably, the number of columns of the distributor corresponds to the number of the block levels.

In the proposed embodiment in each column 311 will slide only the cables directed to the associated level.

Distribution frame 3 comprises also, preferably in the device side, at least a tray 33 adapted to canalize the cable bundle from distributor 31 toward a predetermined level and the way around.

Said trays 33, realized in a preferably metallic material, are arranged at least one for each level provided inside the control unit and each tray 33 is adapted to put into communication exclusively a column 311 with its corresponding level.

Said trays 33 have a different length among them, in such a way as to reach respective columns 311 for guiding the various cables toward corresponding block 2 and the way around.

With said distribution frame 3 it is ensured that each column 311 brings in it only the optical fibers and/or the cables designed for the level to which said columns 311 are dedicated.

In the embodiment described said trays 33 have preferably an "L" shape in such a way as to house the cable bundles, realizing a bend preferably with bending angle sufficiently wide for not causing problems to these cables, guiding them in correspondence to block 2 to which they are destined; furthermore, they prevent the fact that cables can arrive from other columns 311 thanks to the raised borders outside of the entry of corresponding column 311.

To each level and for each block 2 comprised in this level, on both the sides distribution frame 3 comprises a plurality of entrance elements 34 adapted to direct the cable bundles toward the row of connectors 221 corrected by ending module 22 of block 2 to which these cables are directed.

Entrance elements 34, made preferably in plastic material and fixed to structure 4, have an "L" shape giving the possibility to the cables to direct toward block 2 realizing a bend with a suitable bending angle for avoiding thus problems to cables.

The length of said elements 34 varies in a linear way for each row of connectors 221 of ending module 22, thus permitting a better organization of cables.

The variation of length of elements 34 is preferably increasing, starting from the lowest row, permitting thus that bundles of cables directed toward the various connector rows 221 do not cross and are well separated.

Said solution permits to organize and to group the cable bundles permitting an immediate detection of the cable associated to a particular connector 221.

In correspondence to the highest level inside the control unit distribution frame 3 comprises at least a bearing element 35 associated to a column, preferably one for each column with the bearing function for these cables. Said elements 35, preferably made in metallic materials and fixed to columns 311 through for instance welding or equivalent fastening means, are preferably semicircular-shaped in such a way as to ensure a suitable bending angle to said cables avoiding sharp edges and sudden bending variations.

In the control unit in correspondence to each level, preferably in the user side, there is a cable channel 42 designed to bear and to guide the cables which are connected into this side permitting the realization of horizontal translations.

Said cable channel 42, preferably "U"-shaped, made of metallic material for instance, is fixed both to structure 4, in the portion near blocks 2, and to columns 311, in the portion near distributor 31, through welding or equivalent fastening means.

The cables which slide in said cable channels 42 are both of interconnection between blocks 2 of the same control unit, positioned for instance on different planes, or on the same plane, and of interconnection between blocks 2 positioned in different control units put side by side among them.

Said cable through 42 extends preferably along all the width of structure 4, in such a way as to easily receive the cables deriving from block 2 of the user side and to direct them toward columns 311 of distributor 31.

Distributor 31 comprises, inside columns 311, a plurality of openable bundles adapted to retain and organize already inside a column 311 the cables, or to create bundles of smaller cables, according to the service or to the operator, speeding up the laying and dismantling times of a particular service or operator.

These bundles are preferably realized in metallic material and fixed to column 311 through suitable locking means.

Distribution frame 3 also comprises at least an eyelet 36 of inlet of the cables arranged in the cable channel 42 toward distributor 31, in particular toward a specific column 311.

Said eyelets 36 are adapted to let the cable slide from cable channel 42 toward corresponding column 311, organizing at best the cables, avoiding to miss column 311 wherein each single cable is inserted.

Said eyelets 36 preferably have the upper border rounded in such a way as not to damage the cable and to ensure it a suitable bending radius.

Another method for avoiding confusions in the inlet of cables inside columns 311 is to associate to each level a color.

In correspondence to each eyelet 36 is indicated the color corresponding to the level to which column 311 is associated.

said color code is used in the coloring of trays 33 for facilitating the identification of the plane to which they are associated.

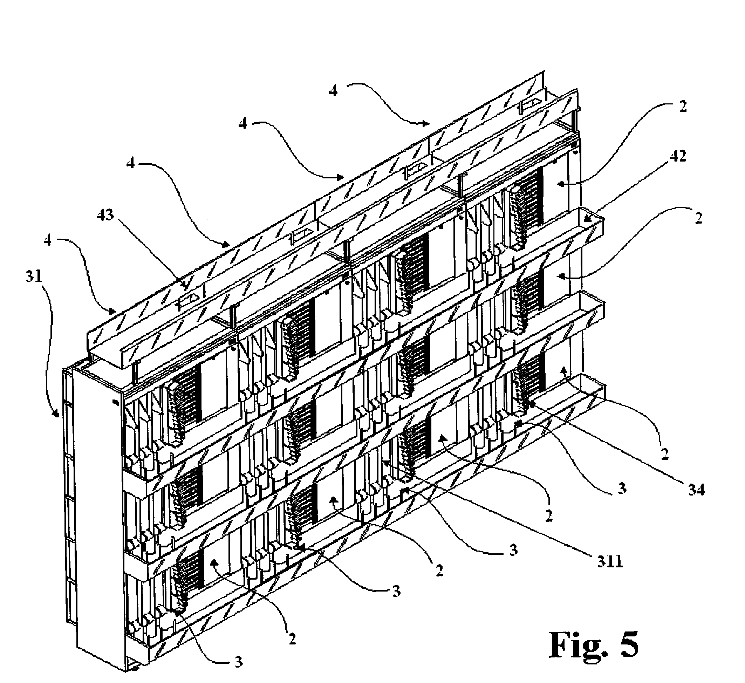

Said control unit can be combined modularly with a series of similar control units obtaining a more complex structure as figure 5 shows.

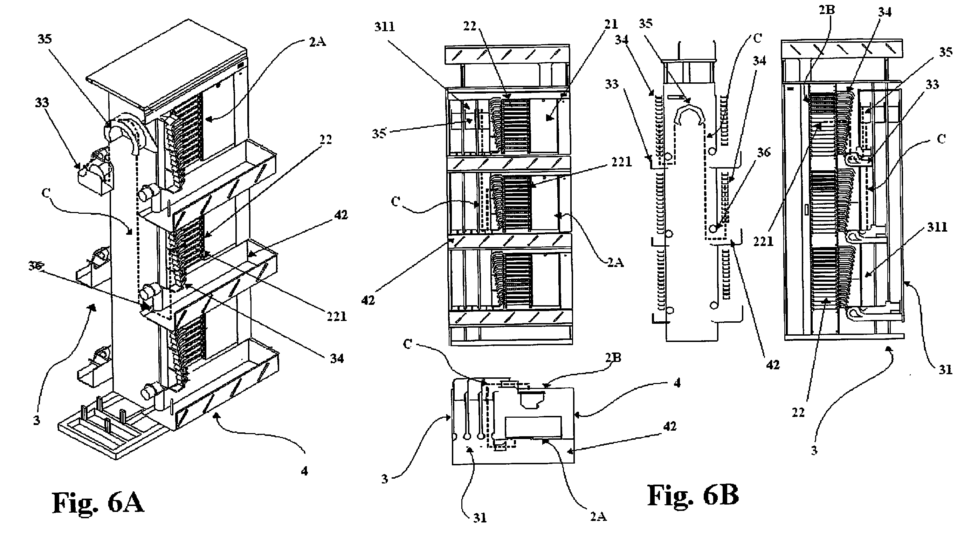

A descriptive and non limiting example of a wiring carried out inside these control units is shown in figures 6A and 6B, which show the path covered by a single cable C, for instance an optical fiber cable for the connection of two blocks.

In particular figures 6A and 6B show the connection between block 2A positioned in the first level (higher) of the user side with block 2B positioned at the second level (intermediate) of the device side.

The fiber connected to block 2A in ending module 22 in connector 221 in the user side is slid in entrance element 34 corresponding to the row in which there is connector 221.

From entrance element 34 the fiber is laid down in cable channel 42 for being brought near columns 311.

Being the fiber bound to the second level, it is inserted in eyelet 36 corresponding to the entry for column 311, adapted to convey the fibers in the second level. In the proposed embodiment column 311 adapted to the second level is the intermediate one among the three present.

Once the fiber is inserted inside the column 311, it is lifted up toward bearing element 35, associated to column 311, upon which these cables are laid passing thus from the user side to the device side.

The fiber laid to element 35 is let down again up to the third level.

Once in correspondence to this level the fiber is laid in tray 33 and brought near to block 2.

From tray 33 the fiber is canalized toward entrance element 34 corresponding to the row of connector 221 of block 2 positioned in the device side to which this fiber was destined.

In the following embodiment columns 311 are positioned in sequence where the first, closer to structure 4, corresponds to the third level, the column next to the second level, as above mentioned, and the most outer one canalizes the cables toward the first level.

In alternative embodiment, the arrangement of columns 311 and the association of columns to the different plans can vary according to the needs but they are still distinguishable adopting the above mentioned color code.

In an alternative embodiment, distributor 31, inside each column 311, comprises a plurality of protuberances 312 adapted for permitting the switching between the user side or the operator side for the various cables.

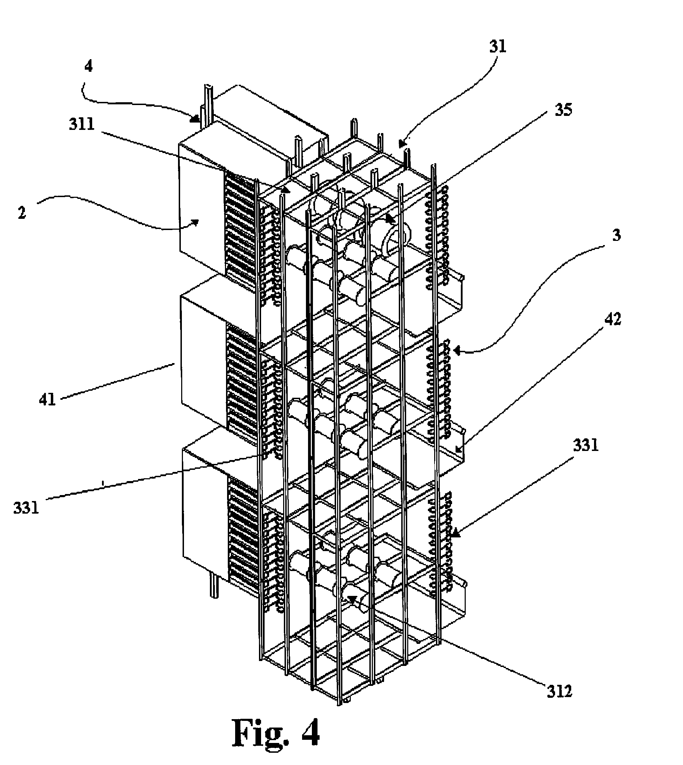

Said protuberances 312 that can be seen in figure 4 are also adapted to permit to cables to carry out a bending radius sufficiently wide and constant, in particular in the use of optical fibers, avoiding the occurrence of losses and/or noise which can reduce the signal/noise ratio of a telecommunication system which is input in said control unit.

In another embodiment, the cables that from cable channel 42 are directed to block 2 and the way around are subdivided into small bundles thanks to a plurality of retaining portions, adapted to retain in bundles these cables, preferably arranged at the input/output of cables from columns 311.

These retaining portions have preferably a shape adapted to permit a simple entrance of the cable in these portions and to avoid accidental outgoings of cables from these portions.

In the alternative embodiment proposed in figure 4 the function of trays 33 and of entrance elements 34 can be assembled in a unique subdivider 331.

In alternative embodiment distributor 3 according to the present invention is directly realized with the control unit to which it must be applied.

## Claims

1. Main distribution frame (3) for control units or cabins for communication systems; said distribution frame (3) comprises:
• a supporting structure (4), which comprises at least a canalizer (43) adapted to canalize and contain the various flows of cable both entering and outgoing from said control unite or cabin
• a plurality of terminal blocks (2) modularly arranged,
said blocks (2) comprising at least a connection module (21), to which arrive the cables to be interconnected for distributing a plurality of services brought by said cables, and a ending module (22) comprising a plurality of connectors (221), adapted to receive said services duly distributed by the connection module (21),
among the connectors (221) of the ending modules (22), of different blocks (2), taking place the interconnections of the cables,
said blocks being supported and organized thanks to a plurality of slots (41) comprised in said structure (4); said distribution frame (3) comprises at least a distributor (31) arranged among the connectors (221) of said blocks (2) for distributing and organizing the various wirings among the same blocks (2);
said distribution frame (3) is **characterized in that** said slots (41) are organized in levels or planes, wherein in each of said slots (41) is present at least a connection block (2), and wherein the distributor (31) comprises at least a column (311), placed side by side to the structure (4), wherein only the cables directed toward blocks (2) of a predetermined level can slide.

2. Main distribution frame according to claim 1, wherein the organization of blocks (2) in the slots (41) is in vertical columns.

3. Distribution frame according to claim 1, wherein the columns (311) are aligned among them.

4. Distribution frame according to claim 1, wherein the distribution frame (3) comprises at least a tray (33) for canalizing the cable bundle from the distributor (31) toward a predetermined level.

5. Distribution frame according to claim 4, wherein said trays (33) are at least one for each level.

6. Distribution frame according to claim 1, wherein the distribution frame (3) comprises a plurality of entrance elements (34) for directing the cable bundle, toward each row of connectors (221) of the ending module (22) of the block (2).

7. Distribution frame according to claim 1 wherein the distribution frame (3) comprises at least a bearing element (35) for said cables associated to the columns (311).

8. Distribution frame according to claim 7, wherein it is comprised at least a bearing element (35) for each column (311).

9. Distribution frame according to claim 1, wherein in correspondence to each level it is present a cable channel (42) for supporting and horizontally guiding the cables that are connected.

10. Distribution frame according to claim 1, wherein in each level the blocks (2) are arranged on two opposite sides of the bearing structure (4) defining an apparatus side and a user side, which cables must be interconnected among them.

11. Distribution frame according to claim 10, wherein on the apparatus side are present said trays (33) and on the user side are present the cable channels (42), one for each level respectively.

12. Distribution frame according to claim 9, wherein the distribution frame (3) comprises at least an eyelet (36) for inletting the cables arranged in the cable channel (42), toward the distributor (31).

## Patentansprüche

1. Hauptverteilungsramen (3) für Kontrolleinheiten oder Kabinen für Kommunikationssysteme, wobei der Verteilungsrahmen (3) aufweist:
- eine Haltestruktur (4), welche mindestens einen Kanalisierer (43) aufweist, der dazu ausgelegt ist, die verschiedenen Läufe von den Kontrolleinheiten oder der Kabine sowohl eingehenden als auch ausgehenden Kabeln zu kanalisieren und aufzunehmen,
- eine Mehrzahl von Anschlussblöcken (2), die modular angeordnet sind,
wobei die Anschlussblöcke (2) mindestens ein Verbindungsmodul (21) aufweisen, an dem die Kabel, die zum Verteilen einer Mehrzahl von durch die Kabel erbrachten Diensten miteinander verbunden werden sollen, ankommen, und ein Endmodul (22), das eine Mehrzahl von Verbindern (221) aufweist, dazu ausgelegt, die ordnungsgemäß durch das Verbindungsmodul (21) verteilten Dienste zu empfangen,
wobei zwischen den Verbindern (221) der Endmodule (22), von unterschiedlichen Blocks (2), die Verbindungen der Kabel stattfinden, wobei die Blocks gehalten und organisiert sind mittels einer Mehrzahl von Schlitzen (41), die in der Struktur (4) enthalten sind;
wobei der Verteilungsrahmen (3) mindestens einen Verteiler (31) aufweist, der zwischen den Verbindern (221) der Blocks (2) angeordnet ist, zum Verteilen und Organisieren der verschiedenen Verkabelungen zwischen den selben Blocks (2);
wobei der Verteilungsrahmen (3) **dadurch gekennzeichnet ist, dass** die Schlitze (41) in Niveaus oder Ebenen organisiert sind, wobei in jedem der Schlitze (41) mindestens ein Verbindungsblock (2) vorhanden ist, und wobei der Verteiler (31) mindestens eine Spalte (311) aufweist, die Seite-an-Seite mit der Struktur (4) angeordnet ist, wobei nur die Kabel, die zu Blocks (2) eines vorbestimmten Niveaus gerichtet sind, gleiten können.

2. Hauptverteilungsrahmen nach Anspruch 1, wobei die Organisation von Blocks (2) in den Schlitzen (41) in vertikalen Spalten ist.

3. Verteilungsrahmen nach Anspruch 1, wobei die Spalten (311) untereinander ausgerichtet sind.

4. Verteilungsrahmen nach Anspruch 1, wobei der Verteilungsrahmen (3) mindestens ein Fach (33) zum Kanalisieren des Kabelbündels von dem Verteiler (31) hin zu einem vorbestimmten Niveau aufweist.

5. Verteilungsrahmen nach Anspruch 4, wobei es mindestens ein Fach (33) für jedes Niveau gibt.

6. Verteilungsrahmen nach Anspruch 1, wobei der Verteilungsrahmen (3) eine Mehrzahl von Eingangselementen (34) zum Führen des Kabelbündels hin zu jeder Reihe des Verbinders (221) des Endmoduls (22) des Blocks (2) aufweist.

7. Verteilungsrahmen nach Anspruch 1, wobei der Verteilungsrahmen (3) mindestens ein Aufnahmeelement (35) für die den Spalten (311) zugeordneten Kabel aufweist.

8. Verteilungsrahmen nach Anspruch 7, wobei für jede Spalte (311) mindestens ein Aufnahmeelement (35) existiert.

9. Verteilungsrahmen nach Anspruch 1, wobei entsprechen jedem Niveau ein Kabelkanal (42) existiert, zum Halten und horizontalen Führen der Kabel, die verbunden sind.

10. Verteilungsrahmen nach Anspruch 1, wobei auf jedem Niveau die Blocks (2) an zwei gegenüberliegenden Seiten der Haltestruktur (4), welche eine Geräteseite und eine Anwenderseite definieren, angeordnet sind, wobei Kabel untereinander verbunden sein müssen.

11. Verteilungsrahmen nach Anspruch 10, wobei an der Geräteseite Fächer (33) vorhanden sind, und an der Anwenderseite Kabelkanäle (42) vorhanden sind, einer für jeweils jedes Niveau.

12. Verteilungsrahmen nach Anspruch 9, wobei der Verteilungsrahmen (3) mindestens eine Öse (36) aufweist, zum Einlassen der in dem Kabelkanal (42) angeordneten Kabel hin zu dem Verteiler (31).

## Revendications

1. Structure de répartiteur principal (3) pour des unités de contrôle ou des cabinets destinés à des systèmes de communication ; ladite structure de répartiteur principal (3) comprend :
• une structure porteuse (4), qui comprend au moins une canalisation (43) conçue pour canaliser et contenir les différents lots de câbles à la fois qui entrent et qui sortent du panneau ou du poste de commande,
• une pluralité de blocs terminaux (2) agencés de manière modulaire, lesdits blocs (2) comprenant au moins un module de connexion (21), auquel arrivent les câbles qui doivent être interconnectés pour distribuer une pluralité de services fournis par lesdits câbles, et un module final (22) comprenant une pluralité de connecteurs (221), conçus pour recevoir lesdits services, dûment distribués par le module de connexion (21),
les interconnexions des câbles se trouvant parmi les connecteurs (221) des modules finaux (22), des différents blocs (2),
lesdits blocs étant supportés et organisés grâce à une pluralité de fentes (41) incluses dans ladite structure (4) ; ladite structure de répartiteur principal (3) comprend au moins un distributeur (31) agencé parmi les connecteurs (221) desdits blocs (2) afin de distribuer et d'organiser les différents câblages entre les mêmes blocs (2) ;
ladite structure de répartiteur principal (3) est **caractérisé en ce que** lesdites fentes (41) sont organisées en niveaux ou en plans, dans lequel au moins un bloc de connexion (2) est présent dans chacune desdites fentes (41), et dans lequel le distributeur (31) comprend au moins une colonne (311), placée côte à côte avec la structure (4), dans lequel seuls les câbles orientés vers les blocs (2) d'un niveau prédéterminé peuvent coulisser.

2. Structure de répartiteur principal selon la revendication 1, dans lequel l'organisation des blocs (2) dans les fentes (41) est en colonnes verticales.

3. Structure de répartiteur principal selon la revendication 1, dans lequel les colonnes (311) sont alignées les unes par rapport aux autres.

4. Structure de répartiteur principal selon la revendication 1, dans lequel la structure de répartiteur principal (3) comprend au moins un chemin de câble (33) destiné à canaliser le faisceau de câbles à partir du distributeur (31) vers un niveau prédéterminé.

5. Structure de répartiteur principal selon la revendication 1, dans lequel lesdits chemins de câble (33) sont au nombre d'au moins un pour chaque niveau.

6. Structure de répartiteur principal selon la revendication 1, dans lequel la structure de répartiteur principal (3) comprend une pluralité d'éléments d'entrée (34) destinés à orienter le faisceau de câbles, vers chaque rangée de connecteurs (221) du module final (22) du bloc (2).

7. Structure de répartiteur principal selon la revendication 1, dans lequel la structure de répartiteur principal (3) comprend au moins un élément porteur (35) pour lesdits câbles associés aux colonnes (311).

8. Structure de répartiteur principal selon la revendication 7, dans lequel au moins un élément porteur (35) est prévu pour chaque colonne (311).

9. Structure de répartiteur principal selon la revendication 1, dans lequel une gouttière pour passage de câble (42) correspondante est présente à chaque niveau afin de supporter et de guider horizontalement les câbles qui sont connectés.

10. Structure de répartiteur principal selon la revendication 1, dans lequel, à chaque niveau, les blocs (2) sont agencés sur deux côtés opposés de la structure porteuse (4) en définissant un côté appareil et un côté utilisateur, lesquels câbles doivent être interconnectés.

11. Structure de répartiteur principal selon la revendication 10, dans lequel lesdits chemins de câble (33) se trouvent du côté appareil, et les gouttières pour passage de câble (42) se trouvent du côté utilisateur, avec un pour chaque niveau, respectivement.

12. Structure de répartiteur principal selon la revendication 9, dans lequel la structure de répartiteur (3) comprend au moins un oeillet (36) permettant de faire entrer les câbles agencés dans la gouttière pour passage de câble (42) vers le distributeur (31).
